# EUROPEAN PATENT APPLICATION

(11) **EP 3 876 407 A1**
(43) Date of publication of application: **08.09.2021**
(21) Application number: 20160581.3
(22) Date of filing: 03.03.2020
(51) Int. Cl.: H02M 1/32, H02M 7/5387, H02H 1/00, H02S 50/00

(54) **METHOD FOR DETECTING ELECTRIC ARC, AND INVERTER**

(71) Applicant: MARICI Holdings The Netherlands B.V., 3068AX Rotterdam (NL)
(72) Inventor: Juvonen, Linda, 00380 Helsinki (FI); Beck, Christoffer, 00380 Helsinki (FI); Koivula, Ville, 00380 Helsinki (FI)
(74) Representative: Kolster Oy Ab

(57) **Abstract**

A method for detecting an electric arc, and an inverter, comprising at least one switching branch with an alternating current pole (AC1, AC2, AC3), wherein each switching branch comprises at least two controllable semiconductor switches with respective antiparallel diodes connected in series between a positive direct current pole (Udc+) of the inverter and a negative direct current pole (Udc-) of the inverter (10), and wherein the inverter (10) is configured to monitor a current and/or a voltage of at least one alternating current pole (AC1, AC2, AC3) of the inverter, and detect an electric arc in response to the monitored current and/or voltage comprising a predetermined frequency content.

## Description

### FIELD

The present invention relates to a method for detecting an electric arc, and in particular to a method for detecting an electric arc in a system comprising at least one inverter, and to an inverter.

### BACKGROUND

An inverter is an electrical device enabling conversion of DC (direct current) power from a DC power source to AC (alternating current) power. Thus, 'inverter' generally refers to an electronic device or circuitry that is able to convert direct current to alternating current. An example of an inverter is a semiconductor bridge implemented by means of controllable semiconductor switches, such as IGBTs (Insulated-Gate Bipolar Transistor) or FETs (Field-Effect Transistor), which are controlled according to a modulation or control scheme used.

One example of an electric system comprising an inverter is a photovoltaic system, such as a photovoltaic power plant or generator, in which one or more photovoltaic panels supply DC power to one or more inverters, which convert the DC power to AC power. The AC power may be supplied to various AC loads via an AC network, for example. Large photovoltaic power plants may comprise a plurality of parallel inverters each receiving DC power from an array of photovoltaic panels, for instance. Another example of an electric system comprising an inverter is a wind power generation system, such as a wind farm, which may comprise several wind generators, driven by wind turbines, supplying DC power to one or more inverters, which convert the DC power to AC power further supplied to various AC loads via an AC network, for example.

An electric arc occurring inside an inverter may have severe implications on material and human safety, for example. A protection based on fuses may not be sufficient against arc faults. As an example, there may be AC fuses only on a medium voltage side of a distribution transformer of a solar power plant. Consequently, such AC fuses may be dimensioned to withstand nominal operating current of several parallel solar inverters, for example. In such a case the fault current generated by a single arc inside an inverter may be too small to blow the fuses.

One possible solution to protect an inverter device against an electric arc is to use an optical arc protection system within the inverter. The optical arc protection system can optically sense arc flashes via one or more light collecting sensors and give a trip command to one or more circuit breakers that may feed an arc fault in an electric system and/or send an alarm to an operator of the system, for example. A problem associated with such an optical arc protection system is that it requires the one or more light collecting sensors and their control system to be installed in the electric system, which may be costly. Moreover, such an optical arc protection system is only capable of detecting an arc within a space monitored by the one or more light collecting sensors.

### BRIEF DESCRIPTION

An object of the present invention is thus to provide a method and an apparatus for implementing the method so as to overcome the above problems or at least to alleviate them. The objects of the invention are achieved by a method, a computer program product, an inverter, and an arrangement, which are characterized by what is stated in the independent claims. The preferred embodiments of the invention are disclosed in the dependent claims.

The invention is based on the idea of monitoring by an inverter a current and/or a voltage of at least one alternating current pole of the inverter, and detecting an electric arc in response to the monitored current and/or voltage comprising a predetermined frequency content.

An advantage of the solution of the invention is that an electric arc can be detected on the basis of current and/or voltage measurements performed within the inverter and thus additional equipment may not be needed for the detection.

### BRIEF DESCRIPTION OF THE DRAWINGS

In the following the invention will be described in greater detail by means of preferred embodiments with reference to the attached drawings, in which
Figure 1 illustrates an example of an electric system according to an embodiment;
Figure 2 illustrates an example of a circuit diagram according to an embodiment;
Figure 3 illustrates an example of a circuit diagram according to an embodiment;
Figure 4 illustrates an example of an electric system according to an embodiment; and
Figure 5 illustrates an example of voltage and current quantities.

### DETAILED DESCRIPTION

The application of the various embodiments described herein is not limited to any specific system, but they can be used in connection with various electric systems. Moreover, the use of the various embodiments described herein is not limited to systems employing any specific fundamental frequency or any specific voltage level, for example.

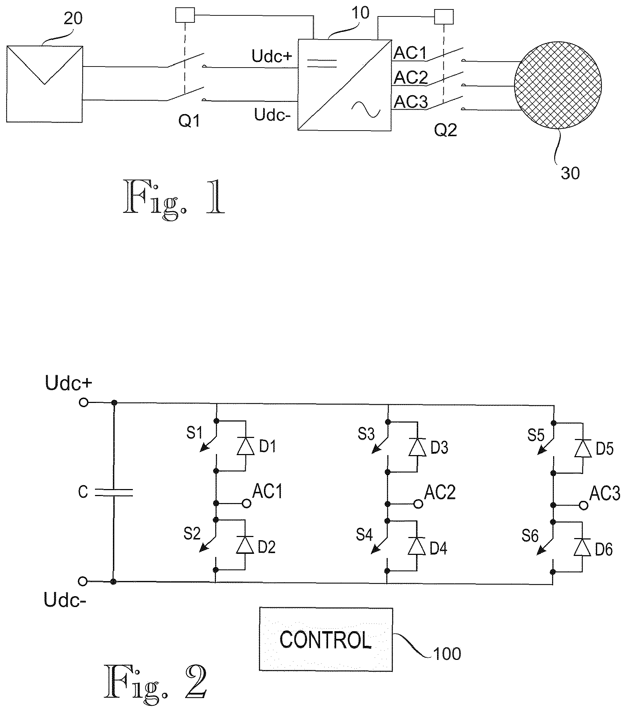

Figure 1 illustrates a simplified example of an electric system. The figure shows only components necessary for understanding the various embodiments. The exemplary system of Figure 1 comprises an inverter 10, i.e. an electric power converter, which can operate as a DC-to-AC converter. Consequently, the inverter 10 may comprise a suitable electronic device or circuitry that is able to convert direct current to alternating current. The inverter 10 may be configured to operate as a single-stage inverter or as a multi-stage inverter and hence comprise two or more converter stages, for instance. DC poles Udc+, Udc- of the inverter 10 may be connected to a DC power source 20 as illustrated. In the example of Figure 1 the DC power source 20 is a photovoltaic (PV) power generation system comprising one or more photovoltaic panels. Another example of a possible DC power source 20 is a wind power generation system, such as a wind farm, which may comprise one or more wind generators, driven by one or more wind turbines, for instance. Other type(s) of DC power source(s) or combinations thereof could also be utilized, such as a fuel cell DC power source. The inverter 10 may be coupled to the DC power source 20 via at least one switch Q1 that enables the inverter 10 to be electrically connected to and disconnected from the DC power source 20. The at least one switch Q1 can be a mechanical switch, an electromechanical switch, such as a contactor or a circuit breaker, or a semiconductor switch, for instance. Such switch(es) Q1 may be manually controlled or electronically controlled such as the switch Q1 in the example of Figure 1, which may be controlled by the inverter 10. Further, an AC output AC1, AC2, AC3 of the inverter 10 may be connected to an AC network 30, such as a public electrical grid or another kind of AC network, in order to supply power from the DC power source 20 to the AC network 30, when the electric system is in normal operation. The AC connection between the inverter 10 and the AC network 30 may be a three-phase AC connection as illustrated, for example. The inverter 10 may be coupled with the AC power network 30 via at least one switch Q2 that enables the inverter 10 to be electrically connected to and disconnected from the AC power network 50. The at least one switch Q2 can be a mechanical switch, an electromechanical switch, such as a contactor or a circuit breaker, or a semiconductor switch, for instance. Such switch(es) Q2 may be manually controlled or electronically controlled such as the switch Q2 in the example of Figure 1, which may be controlled by the inverter 10. All or some of the possible external switches Q1, Q2 shown in Figure 1 could also be internal switches inside the inverter 10, for example. The electric system may further comprise additional components such as filters and/or fuses, which have not been shown in the figure for the sake of clarity. There could also be one or more transformers and/or converters (not shown in the figures) connected between the inverter 10 and the AC network 30, for example.

Figure 2 illustrates an example of an inverter 10 according to an embodiment. The exemplary inverter of Figure 2 is a two-level three-phase converter that can function both an inverter and also as a rectifier, and the main circuit thereof comprises three switching branches. The first switching branch comprises semiconductor switches S1 and S2, and their antiparallel diodes D1 and D2, respectively. The second switching branch comprises semiconductor switches S3 and S4, and their antiparallel diodes D3 and D4, respectively. The third switching branch comprises semiconductor switches S5 and S6, and their antiparallel diodes D5 and D6, respectively. The semiconductor switches S1 to S6 may be any kind of controllable power semiconductor switches, such as IGBTs (Insulated-Gate Bipolar Transistor) or FETs (Field-Effect Transistor), which can be controlled according to a modulation or control scheme used, for example. The exemplary inverter 10 further comprises a DC part illustrated with a capacitive circuit C, which may comprise one or more capacitors. The exemplary inverter 10 of Figure 2 further comprises a control arrangement 100, which controls the operation of the inverter 10. The control arrangement 100 may also be configured to control the operation of the external switches Q1, Q2. For the sake of clarity, no internal control connections between the control arrangement 100 and other components of the inverter 10, such as the controllable semiconductor switches S1 to S6, are shown in the figure. The control arrangement 100 may be comprised of one or more physical units and one control arrangement 100 may control a plurality of inverters 10. The functionality according to the various embodiments described herein may be implemented at least partly by means of the control arrangement 100 for the inverter 10. The control arrangement 100 may be configured to obtain or receive measured values of various current and/or voltage quantities utilized in the various embodiments described herein from suitable measuring arrangements within the inverter 10 and/or by using separate measuring arrangements (not shown in the figures). The inverter 10 may readily comprise suitable means, such as current and voltage transformers and/or transducers, for measuring various current and/or voltage quantities relating to their operation, such as current and/or voltage quantities in their AC poles (e.g. busbars) AC1, AC2, AC3 and DC poles (e.g. busbars) Udc+, Udc-, which may be then be utilized without any additional measuring equipment, for example. Moreover, the control arrangement 100 may further control the normal operation of the inverter 10 according to a modulation or control scheme used, for example. According to an embodiment, the normal operation of the inverter 10 may include converting by the inverter 10 DC power into AC power supplied to the three-phase AC network 30 connected to the AC poles AC1, AC2, AC3 of the inverter 10.

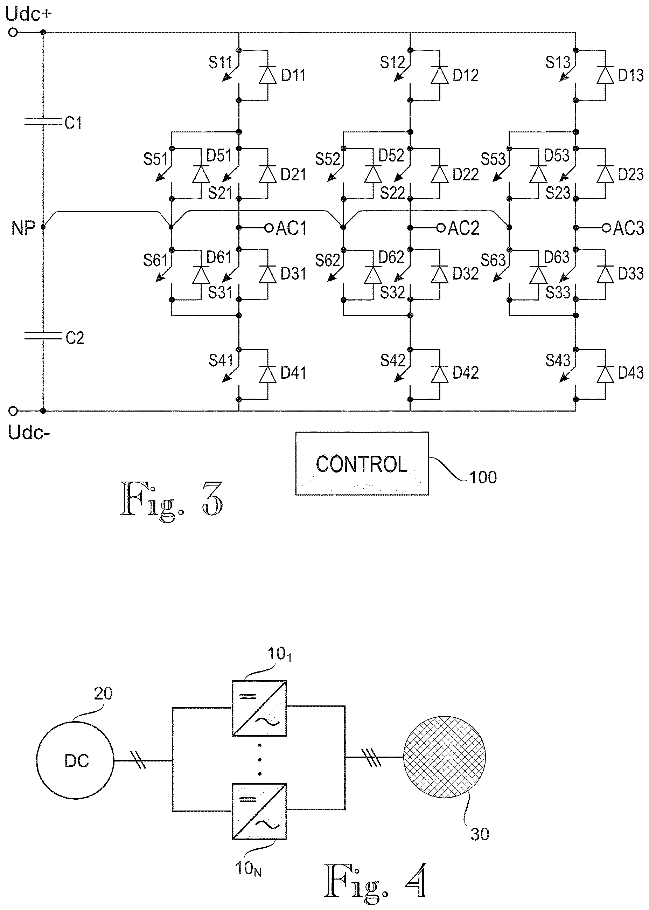

Figure 3 illustrates an example of an inverter 10 according to another embodiment, wherein the main circuit is different from the example of Figure 2. The exemplary inverter of Figure 3 is a three-level three-phase converter that can function both an inverter and also as a rectifier and the main circuit thereof comprises three switching branches. Three-level converters are multi-level converters that have three DC poles. In addition to positive and negative DC poles Udc+, Udc-, they have a neutral DC pole NP. The exemplary three level three-phase converter thus comprises three switching branches with alternating current poles AC1, AC2 and AC3, respectively. The first switching branch comprises a first controllable semiconductor switch S11 and a second controllable semiconductor switch S21 connected in series between the positive direct current pole Udc+ and the alternating current pole AC1 of the switching branch, wherein the first controllable semiconductor switch S11 is connected to the positive direct current pole Udc+. A first antiparallel diode D11 is connected across the first controllable semiconductor switch S11 and a second antiparallel diode D21 is connected across the second controllable semiconductor switch S21. Further, the first switching branch comprises a third controllable semiconductor switch S31 and a fourth controllable semiconductor switch S41 connected in series between the negative direct current pole Udc- and the alternating current pole AC1 of the first switching branch, wherein the fourth controllable semiconductor switch S41 is connected to the negative direct current pole Udc-. A third antiparallel diode D31 is connected across the third controllable semiconductor switch S31, and a fourth antiparallel diode D41 is connected across the fourth controllable semiconductor switch S41. Further, the first switching branch comprises a fifth controllable semiconductor switch S51 connected between the neutral direct current pole NP and a connection point between the first controllable semiconductor switch S11 and the second controllable semiconductor switch S21, and a sixth controllable semiconductor switch S61 connected between the neutral direct current pole NP and a connection point between the third controllable semiconductor switch S31 and the fourth controllable semiconductor switch S41. A fifth antiparallel diode D51 is connected across the fifth controllable semiconductor switch S51 and a sixth antiparallel diode D61 is connected in parallel to the sixth controllable semiconductor switch S61. Also the second and third switching branches each comprises in a similar manner a first antiparallel diode D12, D13, a second antiparallel diode D22, D23, a third antiparallel diode D32, D33, a fourth antiparallel diode D42, D43, a fifth antiparallel diode D52, D53 and a sixth antiparallel diode D62, D63, respectively, connected in a similar way as in the first switching branch. The second and third switching branches each further comprises a first semiconductor switch S12, S13, a second semiconductor switch S22, S23, a third semiconductor switch S32, S33, a fourth semiconductor switch S42, S43, a fifth semiconductor switch S52, S53 and a sixth semiconductor switch S62, S63, respectively connected in a similar way as in the first switching branch. The DC circuit of the exemplary converter of Figure 3 can comprise of two capacitive circuits C1 and C2 as illustrated.

Figures 2 and 3 only show two illustrative examples of possible inverter circuits that may be utilized in connection with the implementation of the various embodiments. However, the various embodiments described herein may generally be implemented in a system comprising at least one inverter 10 comprising at least one switching branch with an alternating current pole, such that each switching branch comprises at least two controllable semiconductor switches with respective antiparallel diodes connected in series between a positive direct current pole of the inverter and a negative direct current pole of the inverter. According to an embodiment, detecting an electric arc in a system comprising at least one inverter 10 comprises monitoring, by the at least one inverter 10, a current and/or a voltage of at least one alternating current pole AC1, AC2, AC3 of the inverter 10, and detecting an electric arc in response to the monitored current and/or voltage comprising a predetermined frequency content. According to an embodiment, the monitoring of the current and/or voltage quantities is performed at least during converting, by the at least one inverter 10, DC power supplied to the inverter to AC power supplied out from the inverter. According to an embodiment, the monitoring of the current and/or voltage quantities may be performed also when no power is being converted by the inverter.

Thus, according to an embodiment, the detecting of an electric arc can be done by monitoring AC current(s) and/or AC voltage(s) in at least one of the AC poles AC1, AC2, AC3 of the inverter 10. During the arc, a high frequency component or components is/are present in the AC currents and AC voltages. The relevant frequency component or components observed and taken into account may be e.g. about 10 kHz, or more generally selected between 1 kHz and 100 kHz, for instance. Such high frequencies may be separated from the fundamental AC frequency (e.g. 50 Hz or 60 Hz) and the switching frequency of the inverter 10 e.g. by suitable filtering. Then an arc fault indicator can be determined e.g. by calculating an average value of an absolute value of a signal comprising only such high frequency component(s) affected by an arc. A reference level for the arc fault indicator may be defined in a normal state of the electric system without an arc present therein by calculating the arc fault indicator during such normal state. The reference level for the arc fault indicator may be set to equal to the arc fault indicator value during such normal state or set somewhat higher, for example. Then during the use of the inverter 10, the arc fault indicator may be calculated essentially continuously, or at predetermined intervals, in order to monitor the high frequency content in the monitored AC currents and/or voltages. If the arc fault indicator exceeds the predefined reference level of the arc fault indicator, it indicates that the predetermined frequency content is present in monitored current and/or voltage and an arc can be detected.

Both an AC arc and a DC arc may be detected based on the high frequency content present in the current(s) and/or voltage(s) in at least one of the AC poles AC1, AC2, AC3 of the inverter 10 as described above when the switching branches of the inverter 10 comprise the antiparallel diodes connected in series between the positive direct current pole of the inverter and the negative direct current pole of the inverter. An AC arc, i.e. an arc occurring on the AC side of the inverter 10, directly affects the currents and voltages of the AC poles AC1, AC2, AC3 of the inverter 10. In case of a DC arc, i.e. an arc occurring on the DC side of the inverter 10, the voltage between the DC poles Udc+, Udc- collapses and may go below the level of a rectified AC voltage. In such a situation, the antiparallel diodes of the inverter 10 start conducting and consequently current flows from the AC side of the inverter to the DC side of the inverter. Such current comprises the high frequency component(s) caused by the DC arc and can be measured on the AC side of the inverter 10.

Figure 4 illustrates an example of an electric system comprising two or more inverters 10₁ to 10_{N} (where N≥2) connected in parallel. The inverters 10i to 10_{N} may be inverter modules belonging to the same device. According to an embodiment, when the system comprises at least two inverters 10₁ to 10_{N}, such that the positive direct current poles of the inverters are connected to each other and the negative direct current poles of the inverters are connected to each other, a location of a DC arc may be determined to be closest to the inverter the voltage between the positive and negative direct current poles of which goes below the predetermined voltage threshold first. This is because in a system comprising such parallel-connected inverters 10₁ to 10_{N}, the DC voltage of the inverter, which is closest to a DC arc, usually collapses first because of inductances in the system. Hence, by observing and comparing the DC voltages of such parallel inverters, it is possible to conclude which one of the parallel inverters is closest to the DC arc occurring in the system. More specifically, the main circuit (including possible AC and DC busbars) of each such parallel inverter 10₁ to 10_{N} comprise inherent inductances which may not be omitted. As an example, if there is an arc within the DC busbar system, the inherent inductances cause delay for the fault current to discharge from the corresponding capacitive circuit. Thus, in certain cases it is possible to locate the arc fault by measuring the individual inverter unit DC voltages. If the arc fault is located e.g. within a certain inverter unit, the DC voltage of that inverter unit will drop the quickest as the inductance between the DC capacitive circuit of that inverter unit and the arc fault is the smallest. If however, the arc fault is e.g. between a common DC coupling point of the parallel connected inverters 10₁ to 10_{N} and the DC supply 20, each inverter unit DC voltage may drop approximately at the same time. Then this information could be used to locate the arc fault outside inverter units. If the parallel busbar systems are not symmetrical, this can cause the respective DC capacitive circuits to discharge with a small deviation depending on the inductances of the respective DC busbars, for example. Such possible minor differences in parallel DC branch circuit inductances can be determined within regular R&D testing activity, for instance, and the differences can be compensated for in the arc determination and locationing in a suitable manner if necessary, for example.

According to an embodiment, also a sum of AC currents of the AC poles AC1, AC2, AC3 can be used for detecting e.g. an arc between two AC poles because in this situation the sum of the AC current is not zero anymore. Thus, the AC voltage monitoring could be utilized for detecting AC arcs because the AC voltages are available also in a situation where the inverter 10 is not feeding power to the AC system 30.

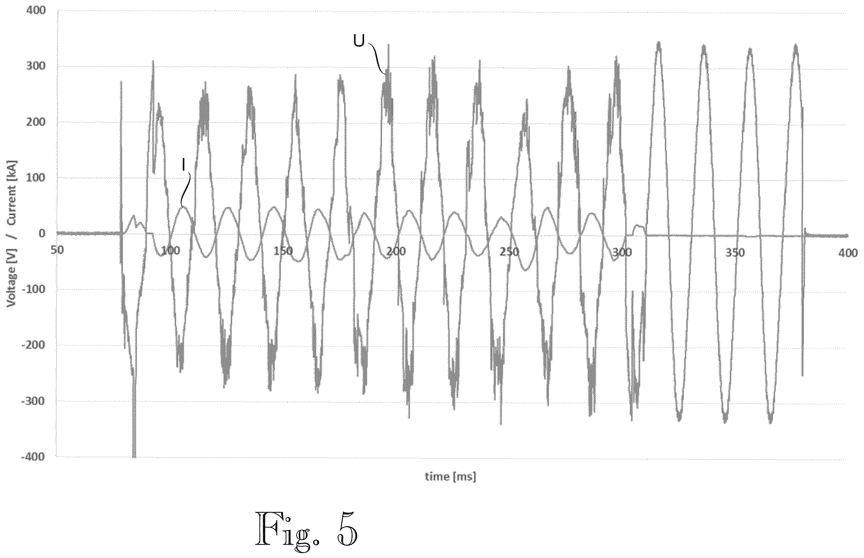

According to an embodiment, an arc may be detected based on the high frequency content present in the voltage(s) in at least one of the AC poles AC1, AC2, AC3 of the inverter 10. E.g. in a situation, when the inverter 10 is on standby mode and it does not modulate, and hence does not feed current to the AC system 30, the arc can be detected with AC voltage measurements of the inverter 10. An arc is always possible, when the AC voltages are present on the inverter. Figure 5 shows an example of measured current I and voltage U of one AC pole AC1, AC2, AC3 of the inverter 10 during an arc occurring in a situation, when the inverter 10 is on standby mode.

According to an embodiment, an arc may be detected based on the high frequency content present in the current(s) in at least one of the AC poles AC1, AC2, AC3 of the inverter 10. E.g. in a situation the inverter is modulating, and hence feeds current to the AC system 30, the arc can be detected with AC current measurements of the inverter 10 as there is a high frequency component(s) present in the phase currents.

The high frequency component observed in the voltages or currents may be about 10 kHz. Also, several frequency components could be observed over a frequency range e.g. around 10 kHz, for instance. The arc fault can be detected when this frequency component is shown in AC currents or AC voltages. As an example, a moving average of the AC current or voltage, e.g. during 0.1 ms time duration (1/10kHZ), can be calculated from the AC current or voltage and then decrease the moving average value from the AC current or voltage including the 10kHz frequency component. Then the result obtained includes only the 10kHz frequency component and by taking an absolute value of this signal and by calculating a moving average of this absolute value, e.g. during 0.1ms time duration, the fault indicator can be achieved. A suitable reference level for the arc fault indicator can be defined tentatively, for example.

According to an embodiment, one or more switching devices Q1, Q2 connected to direct current poles Udc+, Udc- and/or alternating current poles AC1, AC2, AC3 of the inverter 10 may be controlled to a non-conducting state in response to detecting an electric arc. Thus, when the arc is detected then the inverter 10 may give an opening command to a switch Q2, which is located between the AC system 30 and the inverter 10, and or to a switch Q1, which is located between the DC system 20 and the inverter 10, for example. According to an embodiment, it is also additionally or alternatively possible to output an alarm or generally a signal indicating the detected arc, from the inverter 10 to a user or operator, for example. Then, switching devices Q1, Q2 connected to direct current poles Udc+, Udc- and/or alternating current poles AC1, AC2, AC3 of the inverter 10 could be controlled manually.

According to an embodiment, the inverter 10 can provide, e.g. by the control arrangement 100 thereof, the determined arcing event and/or location information for an external controller or any similar entity to be accessed. This may be implemented e.g. by storing the information to a memory location accessible to an external communication bus or channel and/or by actively sending or generally outputting the information by using a predetermined communication protocol.

The control arrangement 100 or other control means controlling the inverter 10 according to any one of the above embodiments, or a combination thereof, may be implemented as one unit or as two or more separate physical units that are configured to implement the functionality of the various embodiments. Herein the term 'unit' generally refers to a physical or logical entity, such as a physical device or a part thereof or a software routine. The control arrangement 100 according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions. The computer or other apparatus implementing the invention, or a part thereof, may further comprise suitable input means for receiving e.g. measurement and/or control data, and output means for outputting e.g. control data. It is also possible to use analogue circuits, programmable logic devices (PLD), a specific integrated circuit or circuits, or discrete electric components and devices for implementing the functionality according to any one of the embodiments.

The various embodiments described herein can be implemented in existing inverters. Present inverters may comprise processors and memory that can be utilized in the functions according to the various embodiments described above. Thus, all modifications and configurations required for implementing an embodiment in existing inverters may be performed as software routines, which may be implemented as added or updated software routines. If at least part of the functionality of an embodiment is implemented by software, such software can be provided as a computer program product comprising computer program code which, when run on a computer, causes the computer or corresponding arrangement to perform the functionality according to any one of the embodiments as described above. Such a computer program code may be stored or generally embodied on a computer readable medium, such as suitable memory, e.g. a flash memory or an optical memory, from which it is loadable to the unit or units executing the program code. In addition, such a computer program code implementing the invention may be loaded to the unit or units executing the computer program code via a suitable data network, for example, and it may replace or update a possibly existing program code.

It will be obvious to a person skilled in the art that, as the technology advances, the inventive concept can be implemented in various ways. The invention and its embodiments are not limited to the examples described above but may vary within the scope of the claims.

## Claims

1. A method for detecting an electric arc in a system comprising at least one inverter (10; 10₁, 10_{N}) comprising at least one switching branch with an alternating current pole (AC1, AC2, AC3), wherein each switching branch comprises at least two controllable semiconductor switches (S1, S2, S3, S4, S5, S6; S11, S21, S31, S41, S12, S22, S32, S42, S13, S23, S33, S43) with respective antiparallel diodes (D1, D2, D3, D4, D5, D6; D11, D21, D31, D41, D12, D22, D32, D42, D13, D23, D33, D43) connected in series between a positive direct current pole (Udc+) of the inverter and a negative direct current pole (Udc-) of the inverter, the method comprising:
monitoring, by the at least one inverter (10; 10₁, 10_{N}), a current and/or a voltage of at least one alternating current pole (AC1, AC2, AC3) of the inverter (10; 10₁, 10_{N}); and
detecting an electric arc in response to the monitored current and/or voltage comprising a predetermined frequency content.

2. A method as claimed in claim 1, comprising:
monitoring, by the at least one inverter (10; 10₁, 10_{N}), a voltage between the positive direct current pole (Udc+) of the inverter and the negative direct current pole (Udc-) of the inverter; and
determining that the detected electric arc is a DC arc in response to a voltage between the positive direct current pole (Udc+) of the inverter and the negative direct current pole (Udc-) of the inverter being below a predetermined voltage threshold while the monitored current and/or voltage comprises the predetermined frequency content.

3. A method as claimed in claim 2, wherein the system comprises at least two inverters (10; 10₁, 10_{N}), wherein the positive direct current poles (Udc+) of the inverters are connected to each other and the negative direct current poles (Udc-) of the inverters are connected to each other, the method comprising:
determining that a location of the DC arc is closest to the inverter the voltage between the positive and negative direct current poles (Udc+, Udc-) of which goes below the predetermined voltage threshold first.

4. A method as claimed in any one of claims 1 to 3, comprising converting, by the at least one inverter (10; 10₁, 10_{N}), DC power supplied to the inverter to AC power supplied out from the inverter, wherein the monitoring of the current and/or voltage quantities is performed at least during the converting.

5. A method as claimed in any one of claims 1 to 4, comprising controlling one or more switching devices (Q1, Q2) connected to direct current poles (Udc+, Udc-) and/or alternating current poles (AC1, AC2, AC3) of the inverter to a non-conducting state in response to detecting the electric arc.

6. A computer program product comprising computer program code, wherein execution of the program code in a computer controlling at least one inverter causes the computer to carry out the steps of the method according to any one of claims 1 to 5.

7. An inverter, comprising:
at least one switching branch with an alternating current pole (AC1, AC2, AC3), wherein each switching branch comprises at least two controllable semiconductor switches (S1, S2, S3, S4, S5, S6; S11, S21, S31, S41, S12, S22, S32, S42, S13, S23, S33, S43) with respective antiparallel diodes (D1, D2, D3, D4, D5, D6; D11, D21, D31, D41, D12, D22, D32, D42, D13, D23, D33, D43) connected in series between a positive direct current pole (Udc+) of the inverter and a negative direct current pole (Udc-) of the inverter (10; 10₁, 10_{N}); and
control means (100) configured to:
monitor a current and/or a voltage of at least one alternating current pole (AC1, AC2, AC3) of the inverter; and
detect an electric arc in response to the monitored current and/or voltage comprising a predetermined frequency content.

8. An inverter as claimed in claim 7, wherein the control means (100) are configured to:
monitor a voltage between the positive direct current pole (Udc+) of the inverter and the negative direct current pole (Udc-) of the inverter; and
determine that the detected electric arc is a DC arc in response to a voltage between the positive direct current pole (Udc+) of the inverter and the negative direct current pole (Udc-) of the inverter being below a predetermined voltage threshold while the monitored current and/or voltage comprises the predetermined frequency content.

9. An inverter as claimed in claim 7 or 8, wherein the inverter (10; 10₁, 10_{N}) is a three-phase inverter comprising three switching branches.

10. An inverter as claimed in claim 7, 8 or 9, wherein the inverter (10; 10₁, 10_{N}) is a two-level inverter.

11. An inverter as claimed in claim 7, 8 or 9, wherein the inverter (10; 10₁, 10_{N}) is a multi-level inverter, comprising at least one intermediate direct current pole at an electric potential between the positive direct current pole (Udc+) of the inverter and the negative direct current pole (Udc-) of the inverter.

12. An inverter as claimed in any one of claims 7 to 11, wherein the control means (100) are configured to perform the monitoring of the current and/or voltage quantities at least during converting, by the inverter (10; 10₁, 10_{N}), of DC power supplied to the inverter to AC power supplied out from the inverter.

13. An inverter as claimed in any one of claims 7 to 12, wherein the control means (100) are configured to control one or more switching devices (Q1, Q2) connected to direct current poles (Udc+, Udc-) and/or alternating current poles (AC1, AC2, AC3) of the inverter to a non-conducting state in response to detecting the electric arc.

14. An arrangement comprising at least two inverters as claimed in any one of claims 7 to 13, wherein the positive direct current poles (Udc+) of the inverters are connected to each other and the negative direct current poles (Udc-) of the inverters are connected to each other, and wherein the control means are configured to:
determine that a location of the DC arc is closest to the inverter the voltage between the positive and negative direct current poles (Udc+, Udc-) of which goes below the predetermined voltage threshold first.

15. An arrangement as claimed in claim 14, comprising at least one photovoltaic power source (20) connected to the positive and negative direct current poles (Udc+, Udc-) of the inverters (10; 10₁, 10_{N}).

## Amended claims

### Amended claims in accordance with Rule 137(2) EPC.

1. A method for detecting an electric arc in a system comprising at least one inverter (10; 10₁, 10_{N}) comprising at least one switching branch with an alternating current pole (AC1, AC2, AC3), wherein each switching branch comprises at least two controllable semiconductor switches (S1, S2, S3, S4, S5, S6; S11, S21, S31, S41, S12, S22, S32, S42, S13, S23, S33, S43) with respective antiparallel diodes (D1, D2, D3, D4, D5, D6; D11, D21, D31, D41, D12, D22, D32, D42, D13, D23, D33, D43) connected in series between a positive direct current pole (Udc+) of the inverter and a negative direct current pole (Udc-) of the inverter, the method comprising:
monitoring, by the at least one inverter (10; 10₁, 10_{N}), a current and/or a voltage of at least one alternating current pole (AC1, AC2, AC3) of the inverter (10; 10₁, 10_{N});
detecting an electric arc in response to the monitored current and/or voltage comprising a predetermined frequency content;
monitoring, by the at least one inverter (10; 10₁, 10_{N}), a voltage between the positive direct current pole (Udc+) of the inverter and the negative direct current pole (Udc-) of the inverter; and
determining that the detected electric arc is a DC arc in response to a voltage between the positive direct current pole (Udc+) of the inverter and the negative direct current pole (Udc-) of the inverter being below a predetermined voltage threshold while the monitored current and/or voltage comprises the predetermined frequency content,
wherein the system comprises at least two inverters (10; 10₁, 10_{N}), wherein the positive direct current poles (Udc+) of the inverters are connected to each other and the negative direct current poles (Udc-) of the inverters are connected to each other, the method further comprising:
determining that a location of the DC arc is closest to the inverter the voltage between the positive and negative direct current poles (Udc+, Udc-) of which goes below the predetermined voltage threshold first.

2. A method as claimed in claim 1, comprising converting, by the at least one inverter (10; 10₁, 10_{N}), DC power supplied to the inverter to AC power supplied out from the inverter, wherein the monitoring of the current and/or voltage quantities is performed at least during the converting.

3. A method as claimed in any one of claims 1 to 2, comprising controlling one or more switching devices (Q1, Q2) connected to direct current poles (Udc+, Udc-) and/or alternating current poles (AC1, AC2, AC3) of the inverter to a non-conducting state in response to detecting the electric arc.

4. A computer program product comprising computer program code, wherein execution of the program code in a computer controlling at least one inverter causes the computer to carry out the steps of the method according to any one of claims 1 to 3.

5. An arrangement comprising at least two inverters, each inverter comprising:
at least one switching branch with an alternating current pole (AC1, AC2, AC3), wherein each switching branch comprises at least two controllable semiconductor switches (S1, S2, S3, S4, S5, S6; S11, S21, S31, S41, S12, S22, S32, S42, S13, S23, S33, S43) with respective antiparallel diodes (D1, D2, D3, D4, D5, D6; D11, D21, D31, D41, D12, D22, D32, D42, D13, D23, D33, D43) connected in series between a positive direct current pole (Udc+) of the inverter and a negative direct current pole (Udc-) of the inverter (10; 10₁, 10_{N}); and
control means (100) configured to:
monitor a current and/or a voltage of at least one alternating current pole (AC1, AC2, AC3) of the inverter;
detect an electric arc in response to the monitored current and/or voltage comprising a predetermined frequency content;
monitor a voltage between the positive direct current pole (Udc+) of the inverter and the negative direct current pole (Udc-) of the inverter; and
determine that the detected electric arc is a DC arc in response to a voltage between the positive direct current pole (Udc+) of the inverter and the negative direct current pole (Udc-) of the inverter being below a predetermined voltage threshold while the monitored current and/or voltage comprises the predetermined frequency content,
wherein the positive direct current poles (Udc+) of the inverters are connected to each other and the negative direct current poles (Udc-) of the inverters are connected to each other, and wherein the control means are configured to:
determine that a location of the DC arc is closest to the inverter the voltage between the positive and negative direct current poles (Udc+, Udc-) of which goes below the predetermined voltage threshold first.

6. An arrangement as claimed in claim 5, wherein the inverter (10; 10₁, 10_{N}) is a three-phase inverter comprising three switching branches.

7. An arrangement as claimed in claim 5 or 6, wherein the inverter (10; 10₁, 10_{N}) is a two-level inverter.

8. An arrangement as claimed in claim 5 or 6, wherein the inverter (10; 10₁, 10_{N}) is a multi-level inverter, comprising at least one intermediate direct current pole at an electric potential between the positive direct current pole (Udc+) of the inverter and the negative direct current pole (Udc-) of the inverter.

9. An arrangement as claimed in any one of claims 5 to 8, wherein the control means (100) are configured to perform the monitoring of the current and/or voltage quantities at least during converting, by the inverter (10; 10₁, 10_{N}), of DC power supplied to the inverter to AC power supplied out from the inverter.

10. An arrangement as claimed in any one of claims 5 to 9, wherein the control means (100) are configured to control one or more switching devices (Q1, Q2) connected to direct current poles (Udc+, Udc-) and/or alternating current poles (AC1, AC2, AC3) of the inverter to a non-conducting state in response to detecting the electric arc.

11. An arrangement as claimed in any one of claims 5 to 10, comprising at least one photovoltaic power source (20) connected to the positive and negative direct current poles (Udc+, Udc-) of the inverters (10; 10₁, 10_{N}).
